# EUROPÄISCHE PATENTANMELDUNG

(11) **EP 4 711 028 A1**
(43) Veröffentlichungstag der Anmeldung: **18.03.2026**
(21) Anmeldenummer: 24216725.2
(22) Anmeldetag: 02.12.2024
(51) Int. Cl.: B01D 53/12, B01D 46/00, B01D 46/48, B01D 53/34, B02C 23/00

(54) **VORRICHTUNG UND VERFAHREN ZUR ABREINIGUNG EINES AN EINER SHREDDERANLAGE ABGESAUGTEN LUFTSTROMS**

(30) Priorität: 13.09.2024 EP 24200205
(71) Anmelder: Keller Lufttechnik GmbH + Co. KG, 73230 Kirchheim unter Teck (DE)
(72) Erfinder: Müller, Bernd, 73265 Dettingen/Teck (DE); Boels, Hans, 9790 Wortegem (BE); Nägele, Thomas, 72622 Nürtingen (DE); Schwenger, René, 73087 Bad Boll (DE); Haase, Oliver, 73278 Schlierbach (DE)
(74) Vertreter: Ruckh, Rainer Gerhard

(57) **Zusammenfassung**

Die erfindungsgemäße Vorrichtung dient zur Abreinigung eines an einer Shredderanlage abgesaugten, Luftverunreinigungen enthaltenden Luftstroms, und umfasst eine Nassabscheidungseinheit (6), eine Additivzuführung (11) und eine Adsorptions- und Filterstufe (9), welche der Nassabscheidungseinheit (6) nachgeordnet sind. Dem Luftstrom sind am Ausgang der Nassabscheidungseinheit (6) mittels der Additivzuführung (11) Additive zugeführt. Der Additive enthaltende Luftstrom wird in der Adsorptions- und Filterstufe (9) abgereinigt. Der Adsorptions- und Filterstufe (9) ist ein Fluidrotor (18) zugeordnet, in welchem Agglomerate aus abgereinigten Partikeln und/oder Additiven mechanisch zerkleinert werden.

## Beschreibung

Die Erfindung betrifft eine Vorrichtung und ein Verfahren zur Abreinigung eines an einer Shredderanlage abgesaugten Luftstroms.

Eine derartige Vorrichtung ist aus der DE 10 2009 055 766 A1 bekannt. Diese Vorrichtung weist zur Abreinigung von Luftverunreinigungen aus dem an der Shredderanlage abgesaugten Luftstrom eine Trockenentstaubungseinheit auf, die bevorzugt aus einem Zyklonabscheider und einem Trockenfilter besteht.

Der Einsatz dieser Vorrichtung ist auf Shredderanlagen begrenzt, die einen Vorshredder zur Vorzerkleinerung von zu zerkleinerndem Gut und einen Hauptshredder zur Hauptzerkleinerung des Guts aufweisen.

Durch die zweitstufige Ausbildung der Shredderanlage mit dem Vorshredder und dem Hauptshredder wird neben einem Energieeinspareffekt als weiterer, vorteilhafter Effekt erhalten, dass dadurch die Staubemissionen und die Gesamt-C-Emissionen bei der Durchführung der Zerkleinerungsvorgänge gegenüber einstufig arbeitenden Shredderanlagen erheblich reduziert werden können.

Der Vorshredder ist dabei insbesondere als Langsamläufer ausgebildet, das heißt als Zerkleinerungsaggregat, das mit zwei gegenläufigen Wellen oder mittels drei mit unterschiedlichen Geschwindigkeiten laufenden Wellen das Gut zerkleinert. Bei einem derartigen Vorshredder ist nicht nur die Staubemission und Gesamt C-Emission während des Zerkleinerungsvorgangs sehr gering. Weiter ist auch die Explosionsgefahr durch die langsam laufenden Zerkleinerungsvorgänge sehr gering. Die Explosionsgefahr kann zudem, ebenso wie beim Hauptshredder, durch eine zumindest teilweise Kapselung weiter reduziert werden.

Mit der die Abluftreinigungseinheit der Shredderanlage bildenden Trockenentstaubungseinheit wird staubhaltige, oder allgemein verunreinigte Luft von verschiedenen, geeignet gewählten Erfassungsstellen in unterschiedlichen Bereichen der Shredderanlage, insbesondere im Bereich des Vorshredders und Hauptshredders, abgeführt. In der Trockenentstaubungseinheit können feinste Stäube aus dem zugeführten Luftstrom abgeschieden werden, wobei hierzu insbesondere C-Emissionen auch effizient aus dem Luftstrom ausgefiltert werden können, so dass die gesetzlich vorgegebenen Schadstoffgrenzwerte eingehalten werden können.

Nachteilig bei dieser Vorrichtung ist deren Beschränkung auf Shredderanlagen, die neben einem Hauptshredder einen Vorshredder aufweisen. Zudem können durch den Einsatz der Trockenentstaubungseinheit zwar die gesetzlichen Schadstoffgrenzwerte eingehalten werden, jedoch können mit dieser nicht alle Schadstoffe im Luftstrom zufriedenstellend eliminiert werden.

Eine gattungsgemäße Vorrichtung ist aus der DE 10 2011 055 155 B4 bekannt.

Der Erfindung liegt die Aufgabe zugrunde, bei einer Shredderanlage entstehende Luftverunreinigungen in einem Luftstrom möglichst umfassend abzureinigen.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die erfindungsgemäße Vorrichtung dient zur Abreinigung eines an einer Shredderanlage abgesaugten, Luftverunreinigungen enthaltenden Luftstroms und umfasst eine Nassabscheidungseinheit, eine Additivzuführung und eine Adsorptions- und Filterstufe, welche der Nassabscheidungseinheit nachgeordnet sind.

Dem Luftstrom sind am Ausgang der Nassabscheidungseinheit mittels der Additivzuführung Additive zugeführt. Der Additive enthaltende Luftstrom wird in der Adsorptions- und Filterstufe abgereinigt. Der Adsorptions- und Filterstufe ist ein Fluidrotor zugeordnet, in welchem Agglomerate aus abgereinigten Partikeln und/oder Additiven mechanisch zerkleinert werden.

Die erfindungsgemäße Vorrichtung und das erfindungsgemäße Verfahren können für Shredderanlagen beliebiger Ausgestaltung eingesetzt werden, insbesondere auch für Shredderanlagen, die nur einen Shredder aufweisen.

Mit der Nassabscheidungseinheit als erster Abscheidestufe der erfindungsgemäßen Vorrichtung werden explosionsfähige Stäube im Luftstrom mit Flüssigkeiten abgeschieden, das heißt die explosionsfähigen Stäube werden aus dem Luftstrom ausgewaschen. Damit wird die Explosionsgefahr in der gesamten Anlage drastisch reduziert, da in den nachfolgenden Einheiten der Vorrichtung nahezu keine explosionsfähigen Konzentrationen von Stäuben mehr auftreten können. Mit dem Einsatz der Nassabscheidungseinheit wird somit mit geringem konstruktivem Aufwand ein effektiver Explosionsschutz für die erfindungsgemäße Vorrichtung erhalten.

Erfindungsgemäß ist als zweite Abscheidestufe eine Adsorptions- und Filterstufe vorgesehen, wobei wesentlich ist, dass zusätzlich eine Additivzuführung vorgesehen ist, mittels derer dem der Adsorptions- und Filterstufe zugeführten Luftstrom Additive zugeführt werden. Die Additivzuführung ist vorteilhaft der Adsorptions- und Filterstufe zugeordnet. In der Adsorptions- und Filterstufe erfolgt allgemein ein Kontakt der Additive und der noch im Luftstrom enthaltenen Luftverunreinigungen. Beispielsweise kann die Adsorptions- und Filterstufe hierbei von einem Festbettadsorber oder einem Flugstromadsorber gebildet sein, wo allgemein durch Adsorption eine Ablagerung der Luftverunreinigungen erfolgt.

Besonders vorteilhaft ist die Adsorptions- und Filterstufe von einem filternden Abscheider, insbesondere einem Trockenabscheider, das heißt einem Trockenfilter gebildet.

Die Additive bilden in diesem Fall Filtrationshilfsstoffe, die sich an den Filterelementen des Trockenfilters ablagern und damit den Abscheidegrad des Filters erhöhen. Die Filterelemente sind dabei zudem vor im Luftstrom enthaltenden feuchten Partikeln wie Fetten und Ölen geschützt. Zu vorgegebenen Zeiten wird der Filter mit einer Abreinigungseinheit abgereinigt und die abgereinigten, Luftverunreinigungen enthaltenden Filtrationshilfsstoffe werden in einem Behälter, insbesondere in einem Entsorgungsbehälter, gesammelt.

In diesem Fall kann eine Additivzuführung derart ausgebildet sein, dass zu vorgegebenen Zeiten die Filtrationshilfsstoffe, das heißt Additive, im Behälter aufgewirbelt werden und so am Trockenabscheider angelagert werden. Die Luftverunreinigungen des auf den Trockenabscheider geführten Luftstroms kommen dann in Kontakt mit den Additiven. Generell werden mit der Adsorptions- und Filterstufe und der zugeordneten Additivzuführung Luftverunreinigungen, wie Dioxine, PCB (polychlorierte Biphenyle) und VOC-Anteile, das heißt Kohlenwasserstoffverbindungen, aber auch restliche Partikel aus dem Luftstrom abgeschieden.

Weiterhin ist vorteilhaft, dass durch den Einsatz inerter, explosionshemmender Additive die Explosionsgefahr in der Vorrichtung weiter reduziert werden kann.

Erfindungsgemäß ist der Adsorptions- und Filterstufe ein Fluidrotor zugeordnet, in welchem Agglomerate aus abgereinigten Partikeln und/oder Additiven mechanisch zerkleinert werden.

Vorteilhaft weist der Fluidrotor wenigstens eine motorisch angetriebene Welle mit Zerkleinerungselementen auf.

Weiter vorteilhaft weist der Fluidrotor eine Wanne auf, in der die Welle gelagert ist.

Vorteilhaft befindet sich der Fluidrotor an der Unterseite des Trockenabscheiders. Aus dem Fluidrotor werden Additive durch Aufwirbelung dem Trockenabscheider zugeführt.

Vorteilhaft werden von dem Fluidrotor zerkleinerte Agglomerate aus abgeschiedenen, partikelförmigen Luftverunreinigungen und/oder Additive über eine Austragsöffnung aus der Wanne ausgeführt und einer Entsorgungseinheit zugeführt.

Mit dem Fluidrotor wird generell eine gute und vollständige Zerkleinerung von Agglomeraten bewirkt, wodurch Verstopfungen von Komponenten der Filteranlage vermieden werden. Dadurch wird eine hohe Betriebssicherheit der Shredderanlage erzielt.

Mit dem Fluidrotor wird zudem eine Ausfuhr der zerkleinerten Agglomerate aus abgeschiedenen, partikelförmigen Luftverunreinigungen und/oder Additive in eine Entsorgungseinheit, wie z. B. einen Big Bag bewerkstelligt.

Der Fluidrotor weist hierfür geeignete Förderelemente wie rotierende Schaufeln auf, die den Inhalt des Fluidrotors der Austragsöffnung zuführen.

Durch die Kombination der Nassabscheidungseinheit mit der Adsorptions- und Filterstufe und der zugeordneten Additivzuführung wird somit eine effiziente Abreinigung von Luftverunreinigungen im von der Shredderanlage abgesaugten Luftstrom erzielt und zudem eine Explosionsgefahr bei einer solchen Anlage weitestgehend reduziert. Mit dieser Vorrichtung wird somit einerseits ein hoher Sicherheitsstandard erzielt.

Bei einer geeigneten Ausbildung der Shredderanlage sind im abgesaugten Luftstrom keine gröberen Partikel enthalten, so dass der an der Shredderanlage abgesaugte Luftstrom direkt der Nassabscheidungseinheit zugeführt werden kann.

Für den Fall, dass in dem Luftstrom, der an der Shredderanlage abgesaugt wird, noch gröbere Partikel enthalten sind, ist der Nassabscheidungseinheit vorzugsweise ein Zyklon vorgeordnet, in welchem diese gröberen Partikel abgeschieden werden.

Zwecksmäßigerweise ist zwischen der Nassabscheidungseinheit und dem Zyklon eine Düse vorgesehen, welche eine Löschmittelsperre bildet.

Dadurch wird die Explosionsgefahr in der Vorrichtung noch weiter reduziert.

Der Abscheidegrad der erfindungsgemäßen Vorrichtung kann noch weiter durch eine Abluftbehandlungseinheit erhöht werden, mit der die Gesamt-Kohlenstoff- und Kohlenwasserstoff-Emission im Luftstrom reduziert wird. Damit können insbesondere schwer abscheidbare organische Verbindungen aus dem Luftstrom abgeschieden werden.

Damit können die gesetzlich vorgegebenen Schadstoffgrenzwerte, insbesondere C-Emissionsgrenzwerte, das heißt Grenzwerte für kohlenstoffhaltige Substanzen, eingehalten werden.

Vorteilhaft ist die Abluftbehandlungseinheit zur Reduzierung der Gesamt-Kohlenstoff- und Kohlenwasserstoff-Emission von einem Aktivkohleadsorber, einer thermischen Nachbehandlung, einer biologischen Abluftbehandlungseinheit, einem Gaswäscher oder einem Plasmareaktor gebildet.

Weiter vorteilhaft kann nach der Nassabscheidungseinheit die Prozessluft erwärmt werden, z.B. durch Einsaugen von Warmluft. Dadurch können Taupunktunterschreitungen vermieden werden. Alternativ oder zusätzlich wird der die Adsorptions- und Filterstufe bildende Trockenabscheider isoliert.

Die Erfindung wird im Folgenden anhand der Zeichnungen erläutert. Es zeigen:
- Figur 1:: Schematische Darstellung einer Vorrichtung zur Abreinigung eines an einer erfindungsgemäßen Shredderanlage abgesaugten Luftstroms.
- Figur 2:: Erstes Ausführungsbeispiel einer Adsorptions- und Filterstufe für die Vorrichtung gemäß Figur 1.
- Figur 3:: Zweites Ausführungsbeispiel einer Adsorptions- und Filterstufe für die Vorrichtung gemäß Figur 1:
a) Seitenansicht im Schnitt
b) Vorderansicht im Schnitt
- Figur 4:: Einzeldarstellung eines Fluidrotors für die Adsorptions- und Filterstufe gemäß den Figuren 2 und 3:
c) Längsschnittdarstellung
d) Querschnittdarstellung

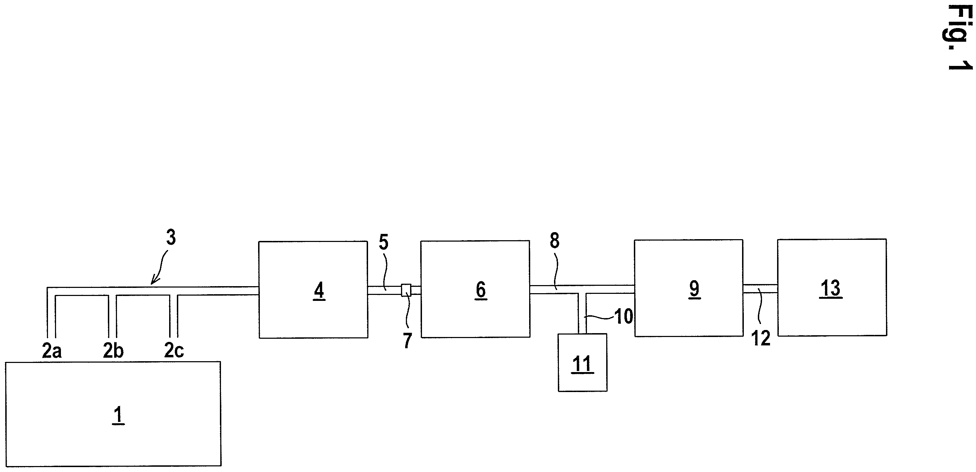

Figur 1 zeigt schematisch ein Ausführungsbeispiel der erfindungsgemäßen Vorrichtung zur Abreinigung eines an einer Shredderanlage abgesaugten Luftstroms. Die Shredderanlage dient vorzugsweise zur Zerkleinerung von Mischschrott oder vorbehandelten Altfahrzeugen, wobei die Vorbehandlung in einer Trockenlegung und Schadstoffentfrachtung der Altfahrzeuge besteht.

Im vorliegenden Fall besteht die Shredderanlage aus einem einzelnen Shredder 1. Der Shredder 1 ist zum Schutz gegen Explosionen zumindest teilweise gekapselt.

Wie in Figur 1 schematisch dargestellt, wird an mehreren Erfassungsstellen 2a, 2b, 2c am Shredder 1 Luftverunreinigungen enthaltene Luft abgesaugt und über ein Leitungssystem 3 einem Zyklon 4 als erster Abscheidestufe der erfindungsgemäßen Vorrichtung zugeführt. Das Leitungssystem 3 kann nicht gesondert dargestellte Druckentlastungsmittel aufweisen, die in einem Explosionsfall aufbrechen und so ein Ausbreiten einer Explosion auf nachfolgende Einheiten mindern.

Im Zyklon 4 erfolgt eine Abscheidung von im Luftstrom enthaltenen gröberen Partikeln. Für den Fall, dass die Shredderanlage derart ausgebildet ist, dass keine gröberen Partikel anfallen, kann auf den Zyklon 4 verzichtet werden.

Der vom Zyklon 4 ausgegebene Luftstrom enthält noch feine, staubartige Partikel. Dieser Luftstrom wird über eine Leitung 5 einer Nassabscheidungseinheit 6 zugeführt. Als weitere Explosionsschutz-Maßnahme ist in dieser Leitung 5 eine Düse 7 in Form einer Benetzungsdüse vorgesehen, die die Funktion einer Löschmittelsperre erfüllt und für eine Löschung von eventuell auftretenden Funken sorgt.

Die Nassabscheidungseinheit 6 dient nicht nur zur Abscheidung von Luftverunreinigungen aus dem Luftstrom, sondern bildet zugleich einen effizienten Explosionsschutz, da explosionsfähige Stäube im Luftstrom in der Flüssigkeit der Nassabscheidungseinheit 6 gebunden werden. Der an der Nassabscheidungseinheit 6 gereinigte Luftstrom weist somit nur noch geringe Konzentrationen von explosionsgefährdenden Stoffen auf.

Der von der Nassabscheidungseinheit 6 ausgegebene Luftstrom wird in einer Leitung 8 einer Adsorptions- und Filterstufe 9 zugeführt. In die Leitung 8 mündet eine Zuführleitung 10 ein. Über diese Zuführleitung 10 werden aus einer Additivzuführung 11 dosiert Additive dem Luftverunreinigungen enthaltenden Luftstrom zugeführt. Die Luftverunreinigungen kommen so in Kontakt mit den Additiven und werden zusammen mit diesen der Adsorptions- und Filterstufe 9 zugeführt.

In der Adsorptions- und Filterstufe 9 erfolgt allgemein durch den Kontakt der Luftverunreinigungen mit den Additiven eine Abscheidung der Luftverunreinigungen. In der Adsorptions- und Filterstufe 9 werden insbesondere Schadstoffe wie polychlorierte Biphenyle (PCB), Dioxine und auch Kohlenstoff-Verbindungen, aber auch restliche partikelförmige Luftverunreinigungen, abgeschieden.

Als Additive werden insbesondere Stoffe wie zum Beispiel Kalksteinmehl oder Aktivkohle eingesetzt.

Als Adsorptions- und Filterstufe 9 kann prinzipiell ein Festbettadsorber oder ein Flugstromadsorber eingesetzt werden. Besonders vorteilhaft wird als Adsorptions- und Filterstufe 9 ein filternder Abscheider, insbesondere ein Trockenabscheider eingesetzt.

Mit der Adsorptions- und Filterstufe 9 als weiterer Abscheidestufe können in zahlreichen Applikationen die Luftverunreinigungen soweit reduziert werden, dass die gesetzlich festgelegten Schadstoffgrenzwerte für Shredderanlagen eingehalten werden und so nach der Adsorptions- und Filterstufe 9 keine weitere Abscheidestufe mehr nötig ist.

Im vorliegenden Fall ist der Adsorptions- und Filterstufe 9 eine weitere Abscheidestufe nachgeordnet. Wie aus Figur 1 ersichtlich, wird der Luftstrom am Ausgang der Adsorptions- und Filterstufe 9 über eine Leitung 12 einer Abluftbehandlungseinheit 13 zugeführt, in der eine Reduzierung des Gesamt-Kohlenstoffs erfolgt. In der Abluftbehandlungseinheit 13 werden auch besonders leichtflüchtige Kohlenstoff-bzw. Kohlenwasserstoff-Verbindungen abgeschieden. Die Abluftbehandlungseinheit 13 kann beispielsweise in Form einer thermischen Nachverbrennung ausgebildet sein. Weiterhin kann die Abluftbehandlungseinheit 13 von einem Plasmareaktor gebildet sein, welcher Ozon erzeugt, der zum Aufbrechen von Kohlenstoff-Verbindungen dient. Schließlich kann die Abluftbehandlungseinheit 13 auch von einem Aktivkohleadsorber, einer biologischen Abluftbehandlungseinheit 13 oder einem Gaswäscher gebildet sein.

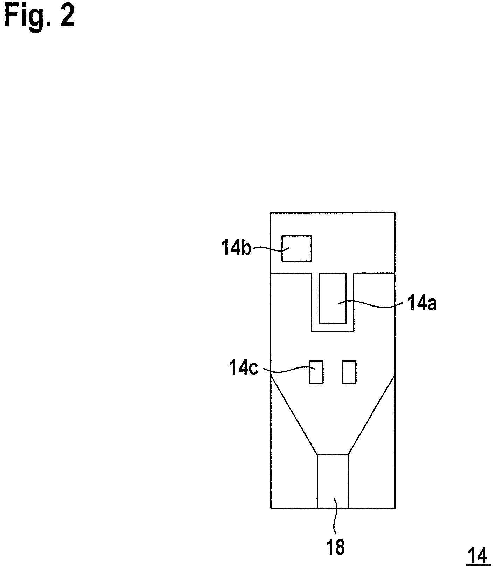

Figur 2 zeigt eine spezifische Ausführungsform einer Adsorptions- und Filterstufe 9 für die Vorrichtung gemäß Figur 1 in Form eines Trockenabscheiders, das heißt eines Trockenfilters 14.

Im vorliegenden Fall weist der Trockenfilter 14 eine Mehrfachanordnung von plissierten Filterelementen 14a auf, welchen der verunreinigte Luftstrom mit den Additiven aus der Additivzuführung 11 zugeführt wird. Prinzipiell sind auch andere Trockenfilter 14, z. B. in Form einer Filterpatrone, eines Schlauchfilters oder eines Elektrofilters möglich.

Die Filterelemente 14a des Trockenfilters 14 bestehen aus plissiertem Filtermaterial und sind flächige, relativ starre Gebilde. Das Filtermaterial kann mit einer Filtermembrane aus PTFE (Polytetraflourethylen) beschichtet sein. Der so ausgebildete Trockenfilter 14 verbindet somit die Vorteile einer Starrkörperfiltration mit einer Membranfiltration.

Zudem kann der Trockenfilter 14 auch katalytische Elemente aufweisen, um auch Dioxine ausfiltern zu können.

Um die Funktionsfähigkeit der Filterelemente 14a auch über große Zeiträume aufrecht zu erhalten, werden diese mit der Abreinigungseinheit 14b vorzugsweise während vorgegebener Zeitintervalle in vorgegebenen Zeitabständen abgereinigt. Die Abreinigungseinheit 14b ist bevorzugt als Druckluftabreinigungseinheit ausgebildet, die von einer Steuereinheit gesteuert wird.

Die bei einer Abreinigung von den Filterelementen 14a abgereinigten Partikel, das heißt Additive und daran angelagerte Luftverunreinigungen, werden im Fluidrotor 18 gesammelt.

Der Fluidrotor 18 ist bevorzugt mit reinen Additiven vorbefüllt.

Oberhalb der offenen Oberseite des Fluidrotors 18 sind Dosierdüsen 14c angeordnet. Mit den Dosierdüsen 14c erfolgt zu bestimmten Zeiten eine Aufwirbelung der Additive, beziehungsweise des Gemisches aus Schadstoffen und Additiven, wobei diese durch die Aufwirbelung an den Filterelementen 14a angelagert werden. Mit den Dosierdüsen 14c kann dabei die den Filterelementen 14a zugeführte Menge an Filtrationshilfsstoffen genau vorgegeben werden.

Die Dosierdüsen 14c und der Fluidrotor 18 bilden somit eine Additivzuführeinheit mit der zusätzlich zur Additivzuführung 11 eine definierte Zuführung von Additiven möglich ist. Generell kann auch auf die Additivzuführung 11 komplett verzichtet werden und die im Trockenfilter 14 integrierte Einheit zur alleinigen Zufuhr von Additiven genutzt werden.

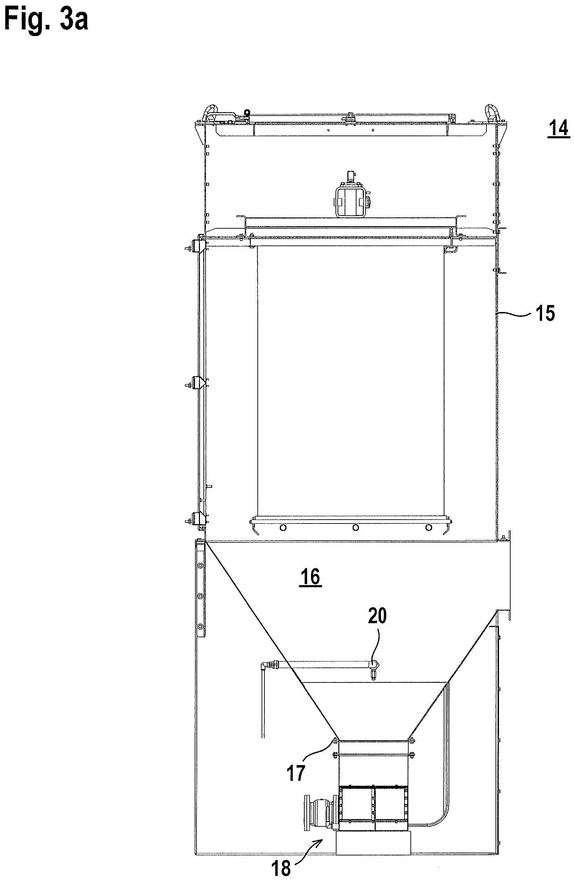

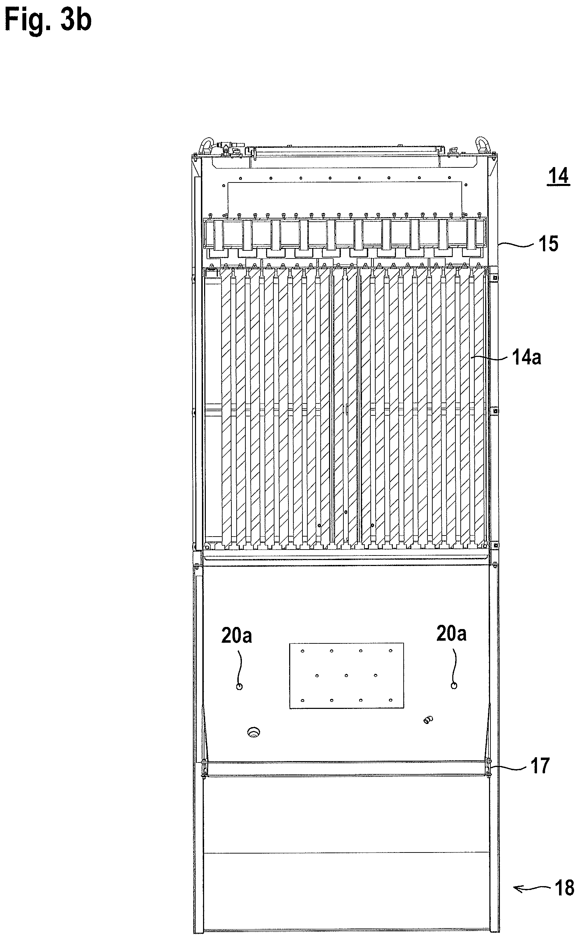

Die Figuren 3a und 3b zeigen eine weitere Ausführungsform einer Adsorptions- und Filterstufe 9 in Form eines Trockenabscheiders, das heißt eines Trockenfilters 14. Figur 3a zeigt eine Seitenansicht des Trockenfilters 14 in einer Schnittdarstellung. Figur 3b zeigt eine Vorderansicht des Trockenfilters 14 in einer Schnittdarstellung.

Die Komponenten des Trockenfilters 14 sind in einem Gehäuse 15 angeordnet. Im oberen Teil des Gehäuses 15 befinden sich die Filterelemente 14a des Trockenfilters 14.

An der Unterseite der Filterelemente 14a schließt ein Trichter 16 an, dessen unteres offenes Ende in den Fluidrotor 18 einmündet, wobei der Fluidrotor 18 über eine Befestigung 17 an den Trichter 16 angebunden ist. Der Fluidrotor 18 dient zur Aufnahme von Additiven.

Innerhalb des Trichters 16 befindet sich weiterhin eine Druckluftdüse 20, mit der Additive im Fluidrotor 18 aufgewirbelt werden können. (Figur 3a). Figur 3b zeigt die Druckluftanschlüsse 20a für die Druckluftdüse 20.

Die Funktion des Trockenfilters 14 wird im Folgenden anhand der Figuren 3a, 3b erläutert.

Zur Verbesserung des Wirkungsgrads des Trockenfilters 14 werden Additive an den Filterelementen 14a angelagert. Hierzu werden in vorgegebenen Zeitintervallen z. B. mit Druckluft Additive aus dem Auffangbehälter 17 bzw. dem Fluidrotor 18 aufgewirbelt und an den Filterelementen 14a angelagert.

Mit den so mit Additiven versehenen Filterelementen 14a erfolgt dann in einem Arbeitsbetrieb die Ausfilterung von Schadstoffen aus dem dem Trockenfilter 14 zugeführten Luftstrom.

In vorgegebenen Zeitintervallen werden die Filterelemente 14a mit einer Druckluftimpulseinheit abgereinigt. Dadurch werden die schadstoffhaltigen Additive von den Filterelementen 14a gelöst und gelangen in den Fluidrotor 18, wo diese mit den dort enthaltenen Additiven gemischt werden.

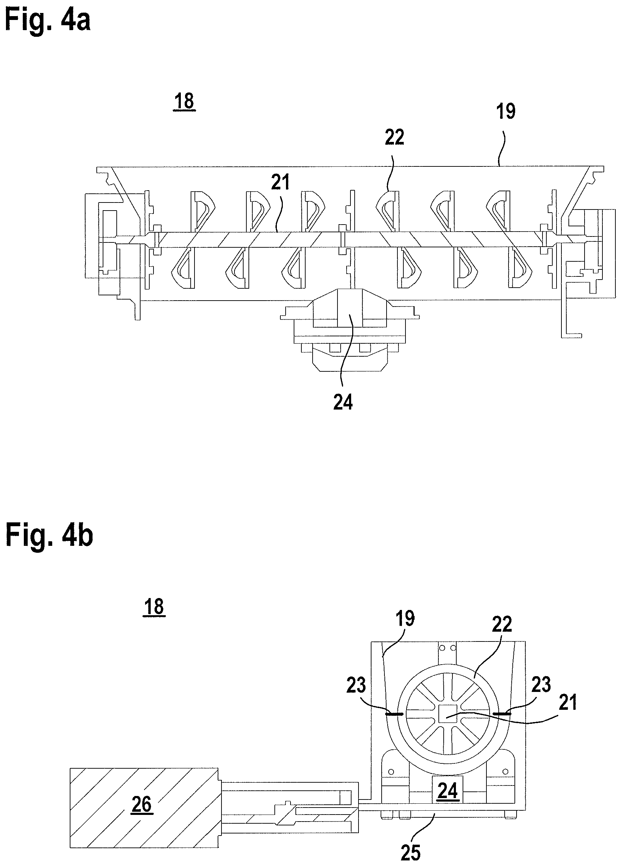

Die Figuren 4a, 4b zeigen ein Ausführungsbeispiel des erfindungsgemäßen Fluidrotors 18.

Der Fluidrotor 18 weist eine nach oben offene Wanne 19 auf, in der eine mittels einer nicht dargestellten Antriebseinheit angetriebene Welle 21 gelagert ist. An der um ihre Längsachse drehbaren Welle 21 sind in deren Längsrichtung versetzt mehrere Schaufeln 22 angeordnet. Die Schaufeln 22 bestehen aus Blechteilen und sind spiralförmig ausgebildet.

Seitlich zu den Schaufeln 22 sind stationär zwei in Längsrichtung des Fluidrotors 18 verlaufende Zackenleisten 23 angeordnet.

In der Wanne 19 gesammelte abgereinigte Agglomerate aus Partikeln und/oder Additiven werden durch die Drehbewegung der Schaufeln 22 und die Zackenleisten 23 zerkleinert, wodurch Verklumpungen und dadurch bedingte Störungen der Shredderanlage vermieden werden.

Die in der Wanne 19 des Fluidrotors 18 gesammelten und zerkleinerten Agglomerate aus Partikeln und/oder Additiven können zu vorgegebenen Zeiten über eine Austragsöffnung 24 ausgeführt und einer Entsorgungseinheit zugeführt werden.

Im vorliegenden Fall befindet sich die Austragsöffnung 24 im Zentrum des Fluidrotors 18, was jedoch nicht zwingend ist. Durch geeignete Fördermittel oder geeignete Ausbildung der Schaufeln 22 wird der Inhalt des Fluidrotors der Austragsöffnung 24 zugeführt.

Die Austragsöffnung 24 kann mittels eines Schiebers 25 geöffnet und verschlossen werden.

Der Schieber 25 kann mittels eines Pneumatik-Antriebs 26 zwischen einer Öffnungs- und Schließstellung bewegt werden.

Die Austragsöffnung 24 befindet sich in einem Ausfallschacht. In diesem Ausfallschacht sind mehrere Fluidpads (nicht dargestellt) eingebaut. Die Fluidpads werden mit Druckluft betrieben, wobei die Fluidpads durch ausströmende Luft vibrieren. Die Vibrationen und die Luftströmungen vermindern Anbackungen und Verstopfungen und verbessern das Fließverhalten der Schüttgüter.

### Bezugszeichenliste

- (1): Shredder
- (2a): Erfassungsstelle
- (2b): Erfassungsstelle
- (2c): Erfassungsstelle
- (3): Leitungssystem
- (4): Zyklon
- (5): Leitung
- (6): Nassabscheidungseinheit
- (7): Düse
- (8): Leitung
- (9): Adsorptions- und Filterstufe
- (10): Zuführleitung
- (11): Additivzuführung
- (12): Leitung
- (13): Abluftbehandlungseinheit
- (14): Trockenfilter
- (14a): Filterelement
- (14b): Abreinigungseinheit
- (14c): Dosierdüsen
- (15): Gehäuse
- (16): Trichter
- (17): Befestigung
- (18): Fluidrotor
- (19): Wanne
- (20): Druckluftdüse
- (20a): Druckluftanschluss
- (21): Welle
- (22): Schaufel
- (23): Zackenleiste
- (24): Austragsöffnung
- (25): Schieber
- (26): Pneumatik-Antrieb

## Patentansprüche

1. Vorrichtung zur Abreinigung eines an einer Shredderanlage abgesaugten, Luftverunreinigungen enthaltenden Luftstroms, mit einer Nassabscheidungseinheit (6), mit einer Additivzuführung (11) und mit einer Adsorptions- und Filterstufe (9), welche der Nassabscheidungseinheit (6) nachgeordnet sind, wobei dem Luftstrom am Ausgang der Nassabscheidungseinheit (6) mittels der Additivzuführung (11) Additive zugeführt sind und der Additive enthaltende Luftstrom in der Adsorptions- und Filterstufe (9) gereinigt wird, **dadurch gekennzeichnet, dass** der Adsorptions- und Filterstufe (9) ein Fluidrotor (18) zugeordnet ist, in welchem abgereinigte Agglomerate aus Partikeln und/oder Additiven mechanisch zerkleinert werden.

2. Vorrichtung nach Anspruch 1, **dadurch gekennzeichnet, dass** der Fluidrotor (18) wenigstens eine motorisch angetriebene Welle (21) mit Zerkleinerungselementen aufweist.

3. Vorrichtung nach Anspruch 2, **dadurch gekennzeichnet, dass** der Fluidrotor (18) eine Wanne (19) aufweist, in der die Welle (21) gelagert ist.

4. Vorrichtung nach einem der Ansprüche 1 bis 3, **dadurch gekennzeichnet, dass** die Adsorptions- und Filterstufe (9) von einem filternden Abscheider gebildet ist.

5. Vorrichtung nach Anspruch 4, **dadurch gekennzeichnet, dass** der filternde Abscheider als Trockenabscheider ausgebildet ist.

6. Vorrichtung nach Anspruch 5, **dadurch gekennzeichnet, dass** dem Trockenabscheider ein Fluidrotor (18) zugeordnet ist, wobei in diesem gelagerte Additive durch Aufwirbelung dem Trockenabscheider zuführbar sind.

7. Vorrichtung nach einem der Ansprüche 3 und 6, **dadurch gekennzeichnet, dass** die Wanne (19) den unteren Teil des Fluidrotors (18) bildet und an die Unterseite eines Trichters (16) anschließt

8. Vorrichtung (1) nach einem der Ansprüche 6 oder 7, **dadurch gekennzeichnet, dass** von dem Fluidrotor (18) zerkleinerte Agglomerate von Partikeln und/oder Additiven über eine Austragsöffnung (24) aus der Wanne (19) ausgeführt und einer Entsorgungseinheit zugeführt werden.

9. Vorrichtung nach einem der Ansprüche 1 bis 8, **dadurch gekennzeichnet, dass** der Nassabscheidungseinheit (6) ein Zyklon (4) vorgeordnet ist

10. Vorrichtung nach Anspruch 9, **dadurch gekennzeichnet, dass** zwischen der Nassabscheidungseinheit (6) und dem Zyklon (4) eine Düse (7) vorgesehen ist, welche eine Löschmittelsperre bildet.

11. Vorrichtung nach einem der Ansprüche 1 bis 10, **dadurch gekennzeichnet, dass** nach der Adsorptions- und Filterstufe (9) eine Abluftbehandlungseinheit (13) zur Reduzierung der Gesamt-Kohlenstoff- und Kohlenwasserstoff-Emissionen im Luftstrom vorgesehen ist.

12. Vorrichtung nach Anspruch 11, **dadurch gekennzeichnet, dass** die Abluftbehandlungseinheit (13) zur Reduzierung der Gesamt-Kohlenstoff- und Kohlenwasserstoff-Emission von einem Aktivkohleadsorber, einer thermischen Nachbehandlung, einer biologischen Abluftbehandlungseinheit (13), einem Gaswäscher oder einem Plasmareaktor gebildet ist.

13. Verfahren zur Abreinigung eines an einer Shredderanlage abgesaugten, Luftverunreinigungen enthaltenden Luftstroms, wobei der Luftstrom zunächst einer Nassabscheidungseinheit (6) zugeführt wird und dann unter Zugabe von Additiven aus einer Additivzuführung (11) oder einer internen Additivaufwirbelung einer Adsorptions- und Filterstufe (9) zugeführt wird, wobei in der Adsorptions- und Filterstufe (9) durch den Kontakt mit Additiven eine Adsorption von Luftverunreinigungen erfolgt, **dadurch gekennzeichnet, dass** der Adsorptions- und Filterstufe (9) ein Fluidrotor (18) zugeordnet ist, in welchem Agglomerate aus abgereinigten Partikeln und/oder Additiven mechanisch zerkleinert werden.

14. Verfahren nach Anspruch 13, **dadurch gekennzeichnet, dass** in einem der Nassabscheidungseinheit (6) vorgeordneten Zyklon (4) eine Abscheidung von groben Partikeln erfolgt.

15. Verfahren nach einem der Ansprüche 13 oder 14, **dadurch gekennzeichnet, dass** in einer der Adsorptions- und Filterstufe (9) nachgeordneten Abluftbehandlungseinheit (13) eine Reduzierung der Gesamt-Kohlenstoff- und Kohlenwasserstoff-Emissionen im Luftstrom erfolgt.
